# EUROPÄISCHE PATENTSCHRIFT

(11) **EP 3 580 464 B1**
(45) Veröffentlichungstag und Bekanntmachung des Hinweises auf die Patenterteilung: **16.09.2020**
(21) Anmeldenummer: 18702997.0
(22) Anmeldetag: 01.02.2018
(51) Int. Cl.: F16B 12/38, A47B 88/90

(54) **SCHUBKASTEN UND VERFAHREN ZUR MONTAGE EINER RÜCKWAND AN EINER SEITENZARGE EINES SCHUBKASTENS**
DRAWER AND METHOD FOR MOUNTING A REAR PANEL ON A SIDE ROD OF A DRAWER BOX
TIROIR ET PROCÉDÉ DE MONTAGE D'UN PANNEAU ARRIÈRE SUR UNE TIGE LATÉRALE D'UNE BOÎTE DE TIROIR

(30) Priorität: 10.02.2017 DE 102017102643
(43) Veröffentlichungstag der Anmeldung: 18.12.2019
(73) Patentinhaber: Paul Hettich GmbH & Co. KG, 32278 Kirchlengern (DE)
(72) Erfinder: RÜTER, Stefan, 32549 Bad Oeynhausen (DE); PRUTSCH, Andree, 49074 Osnabrück (DE); SCHWARZ, Michael, 32429 Minden (DE)
(74) Vertreter: Dantz, Jan Henning
(86) Internationale Anmeldenummer: PCT/EP2018/052566
(87) Internationale Veröffentlichungsnummer: WO 2018/145999

(56) Entgegenhaltungen:
- EP-A1- 0 451 113
- WO-A1-2012/068604
- WO-A1-2017/001620
- DE-U1-202009 004 982

## Beschreibung

Die vorliegende Erfindung betrifft einen Schubkasten nach dem Oberbegriff des Anspruches 1 und ein Verfahren zur Montage einer Rückwand an einer Seitenzarge eines Schubkastens nach dem Oberbegriff des Anspruches 6.

Die EP 2 398 350 B1 offenbart eine Eckverbindung für einen Schubkasten, bei der ein Verbinder vorgesehen ist, der auf ein erstes Wandelement aufsteckbar ist und eine Aufnahme zum Einfügen eines winklig dazu angeordneten Wandelementes aufweist. In den Verbinder ist ein Halteelement eingesteckt, mittels dem das zweite Wandelement an dem Verbinder festlegbar ist. Dadurch können die Wandelemente durch einfache Montageschritte aneinander fixiert werden, wobei die Stabilität der Verbindung durch Toleranzen an der Aufnahme begrenzt ist.

In der WO 2017/001620 A1 ist ein Schubkasten offenbart, bei dem eine Rückwand über ein an einem Adapter fixiertes Verbindungselement an einer Seitenzarge festgelegt ist.

Die DE 20 2009 004 982 U1 offenbart einen Schubkasten, bei dem an jeder Seitenzarge ein Eckverbinder mit zwei relativ zueinander verschwenkbaren Teilen vorgesehen ist, um eine Rückwand an einer Seitenzarge zu fixieren.

Es ist daher Aufgabe der vorliegenden Erfindung, einen Schubkasten mit einer stabilen Festlegung einer Rückwand an einer Seitenzarge zu schaffen, der einfach montiert werden kann.

Zur Lösung dieser Aufgabe wird ein Schubkasten mit den Merkmalen des Anspruches 1 und ein Verfahren zur Montage einer Rückwand an einer Seitenzarge eines Schubkastens mit den Merkmalen des Anspruches 6 vorgeschlagen.

Bei dem erfindungsgemäßen Schubkasten ist an oder in zumindest einer Seitenzarge ein Verbindungselement vorgesehen, das Rastmittel aufweist, die an oder in einer Rastaufnahme der Rückwand verrastbar sind, das Verbindungselement an oder in einem Adapter fixiert ist, wobei der Adapter mit einem Wandelement in oder an der Seitenzarge, insbesondere durch Kleben, Schweißen, Schrauben oder Nieten, verbunden ist. Dadurch ist das Verbindungselement unverlierbar an oder in der Seitenzarge fixiert und somit auch für wiederholte Montagevorgänge der Rückwand geeignet. Zudem kann eine Vorfixierung der Rückwand an dem Verbindungselement über Rastmittel erfolgen.

Vorzugsweise ist ein Sicherungselement im Wesentlichen parallel zur Längsrichtung von einer Rückseite in Richtung der Frontblende in das Verbindungselement einschiebbar. Das Sicherungselement ist dabei klemmend an den Rastmitteln festgelegt, wodurch eine kraftschlüssige Fixierung der Rastmittel erfolgt. Dadurch eignet sich die Montage des Sicherungselementes besonders gut für die Serienfertigung, da eine Montage der Rückwand ebenfalls parallel zur Längsrichtung der Seitenzarge erfolgen kann und anschließend eine Fixierung des Sicherungselementes in die gleiche Richtung erfolgt, wobei die Zugänglichkeit zu dem Sicherungselement über die Rückseite des Schubkastens gegeben ist.

Für eine besonders einfache Montage kann an dem Verbindungselement das Sicherungselement integral angeformt sein und über eine Sollbruchstelle von dem Verbindungselement abgetrennt werden. In einem ersten Schritt kann dann das Verbindungselement zusammen mit dem Sicherungselement an oder in der Seitenzarge montiert werden, um dann in einem zweiten Schritt das Sicherungselement von dem übrigen Verbindungselement abzutrennen und für eine kraftschlüssige Fixierung zu sorgen. Das Sicherungselement weist erfindungsgemäß mindestens einen Keil oder Klemmkörper auf, der einen Raststeg des Rastmittels klemmend fixiert. Vorzugsweise weist das Sicherungselement zwei miteinander verbundene Keile auf, die zwei Raststege des Rastmittels klemmend fixieren.

Das Verbindungselement lässt sich einfach als Formteil aus Kunststoff herstellen. Zusätzlich können an dem Verbindungselement alternative Befestigungsmittel angebracht werden, vorzugsweise kann ein Schraubkanal zum optionalen Befestigen einer Rückwand mittels einer Schraube vorgesehen sein, so dass optional beispielsweise eine Rückwand aus einem Holzwerkstoff montiert werden kann.

Bei dem erfindungsgemäßen Montageverfahren wird zunächst ein Verbindungselement in eine Aufnahme an einem Adapter an oder in einer Seitenzarge in einer Richtung im Wesentlichen senkrecht zur Längsrichtung der Seitenzarge eingesetzt, und anschließend wird der Adapter mit dem Verbindungselement an einem Wandelement der Seitenzarge verklebt oder verschweißt. Dadurch wird das Verbindungselement an der gewünschten Position über den Adapter fixiert. Anschließend wird wahlweise eine Rückwand, vorzugsweise aus einem gebogenen Stahlblech, auf ein Rastmittel an dem Verbindungselement aufgeschoben und an dem Rastmittel verrastet, bevor das Rastmittel über ein Sicherungselement kraftschlüssig fixiert wird, oder alternativ wird eine Rückwand an das Verbindungselement angelegt und eine Schraube durch die Rückwand in einen Schraubkanal des Verbindungselementes zur Montage der Rückwand fixiert. Bei dem erfindungsgemäßen Verfahren kann somit optional eine Rückwand über ein Verrasten und kraftschlüssiges Fixieren der Rastmittel montiert werden oder alternativ über das Einbringen einer Schraube, insbesondere bei Einsatz einer Rückwand aus einem Holzwerkstoff. Über ein und dasselbe Verbindungselement lassen sich somit unterschiedliche Typen von Rückwänden auf unterschiedliche Art und Weise befestigen.

In einer bevorzugten Ausgestaltung wird das Sicherungselement im Wesentlichen parallel zur Längsrichtung der Seitenzarge montiert, insbesondere durch Einschieben des Sicherungselementes in das Verbindungselement. Dabei umfasst das Rastmittel zwei Raststege und das Sicherungselement wird klemmend zwischen die beiden Raststege eingeschoben, insbesondere mit einem oder mehreren Keilen zur kraftschlüssigen Fixierung.

In einer bevorzugten Ausgestaltung ist das Sicherungselement integral mit dem Verbindungselement ausgebildet, und für eine Montage wird es von dem Verbindungselement abgetrennt und in eine Aufnahme an dem Verbindungselement eingesteckt. Zudem kann das Sicherungselement auch abgetrennt werden, um einen Schraubkanal an dem Verbindungselement freizugeben, falls eine Montage der Rückwand über eine Schraube erfolgen soll.

Die Erfindung wird nachfolgend anhand mehrerer Ausführungsbeispiele mit Bezug auf die beigefügten Zeichnungen näher erläutert. Es zeigen:

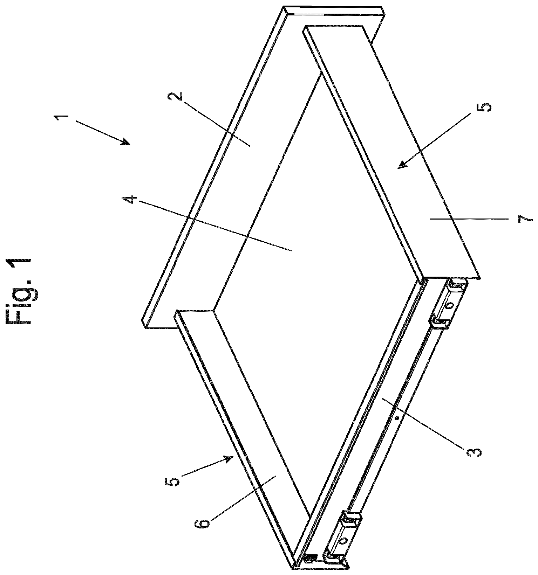

- Figur 1: eine perspektivische Ansicht eines Schubkastens gemäß einem ersten Ausführungsbeispiel;
- Figur 2: eine Detailansicht einer Rückwandverbindung des Schubkastens der Figur 1 bei der Montage,
- Figur 3: eine Ansicht der Rückwandverbindung der Figur 2 nach Montage des Sicherungselementes;
- Figuren 4A und 4B: zwei Ansichten der Rückwandverbindung bei der Montage;
- Figur 5: eine perspektivische Explosionsdarstellung der Teile zur Montage der Rückwand des Schubkastens der Figur 1;
- Figuren 6A bis 6E: mehrere Ansichten des Verbindungselementes für die Montage der Rückwand;
- Figur 7: eine perspektivische Ansicht eines Schubkastens gemäß einem modifizierten Ausführungsbeispiel;
- Figur 8: eine perspektivische Ansicht des Schubkastens der Figur 7 bei der Montage der Rückwand;
- Figur 9: eine perspektivische Ansicht des Schubkastens der Figur 7 vor der Montage der Rückwand;

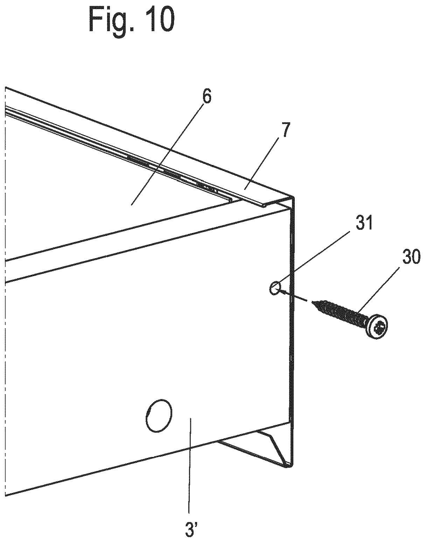

- Figur 10: eine perspektivische Ansicht des Schubkastens der Figur 7 bei der Montage der Rückwand;
- Figuren 11A bis 11E: mehrere Ansichten des Verbindungselementes zur Montage der Rückwand, und
- Figuren 12A und 12B: zwei Ansichten einer Rückwand für einen Schubkasten gemäß einem weiteren Ausführungsbeispiel.

Ein Schubkasten 1 umfasst eine Frontblende 2 und eine Rückwand 3, die über einen horizontalen Boden 4 miteinander verbunden sind. Ferner sind an gegenüberliegenden Seiten des Bodens 4 Seitenzargen 5 vorgesehen, die die Frontblende 2 mit der Rückwand 3 verbinden. Jede Seitenzarge 5 umfasst dabei ein inneres Wandelement 6 und ein äußeres Wandelement 7, die zwischen sich einen Hohlraum ausbilden.

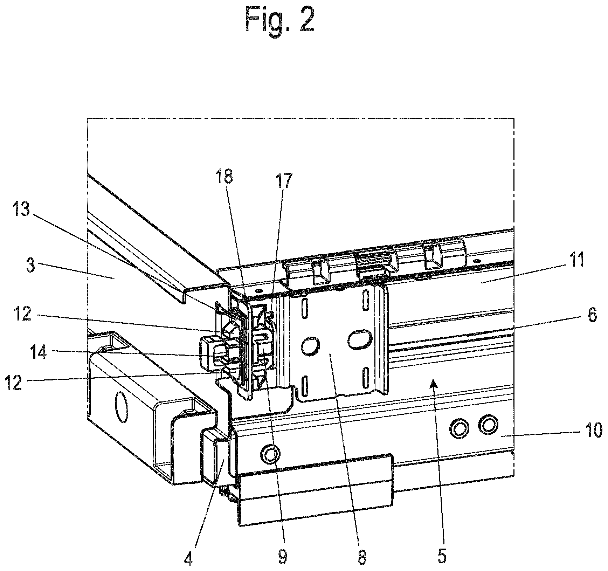

In Figur 2 ist der Eckbereich des Schubkastens 1 mit der Rückwand 3 gezeigt, wobei das äußere Wandelement 7 abgenommen wurde. Die Seitenzarge 5 weist eine untere Halteschiene 10 aus einem gebogenen Stahlblech auf, an der der Boden 4 fixiert ist. Oberhalb der Halteschiene 10 ist eine Verstärkungsschiene 11 vorgesehen, an der das innere Wandelement 6 der Seitenzarge 5 fixiert ist. Zur Verbindung der Rückwand 3 an der Seitenzarge 5 ist ein Adapter 8 vorgesehen, der zur Rückseite hin eine Aufnahme für ein Verbindungselement 9 aufweist. Der Adapter 8 ist aus einem gebogenen Stahlblech hergestellt und beispielsweise mit der oberen Verstärkungsschiene und/oder dem inneren Wandelement 6 verklebt oder verschweißt. An dem Adapter 8 ist ein umgebogener Steg 17 als Anschlag für das Verbindungselement 9 ausgebildet, und beabstandet von dem Steg 17 ein Bügel 18, der eine Aufnahme für das Verbindungselement 9 ausbildet.

An dem Verbindungselement 9 sind Rastmittel 12 in Form von zwei Raststegen mit einem endseitigen Haken ausgebildet, die an einer integral mit der Rückwand 3 ausgebildeten Lasche oder Steg 13 verrastbar sind.

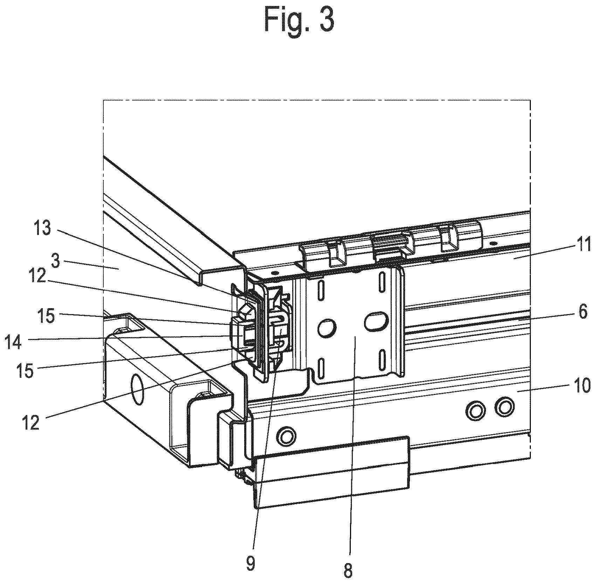

An dem Verbindungselement 9 ist integral ein Sicherungselement 14 ausgebildet, das während der Montage beabstandet von den Raststegen der Rastmittel 12 angeordnet ist. In einem ersten Schritt wird die Rückwand 3 in eine Richtung parallel zur Längsrichtung der Seitenzargen 5 relativ zu dem Verbindungselement 9 bewegt und an den Rastmitteln 12 verrastet. Um diese verrastete Position zu fixieren, kann das Sicherungselement 14 von dem übrigen Verbindungselement 9 abgetrennt werden und in das Verbindungselement 9 eingeschoben werden, wie dies in Figur 3 gezeigt ist. Das Sicherungselement 14 weist zwei voneinander beabstandete Keile 15 oder andere Klemmelemente auf, die in eine Aufnahme zwischen einem mittleren Schraubkanal 21 und den Raststegen einfügbar sind, um die Raststege kraftschlüssig zu fixieren. Das Einschieben des Sicherungselementes 14 in die Aufnahme an dem Verbindungselement 9 erfolgt dabei parallel zur Längsrichtung der Seitenzarge 5.

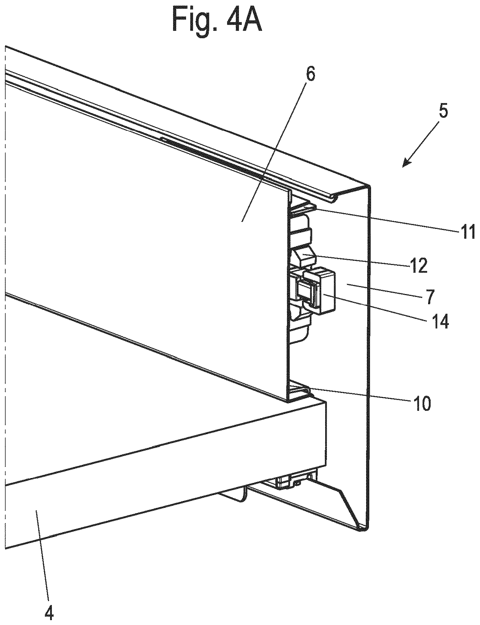

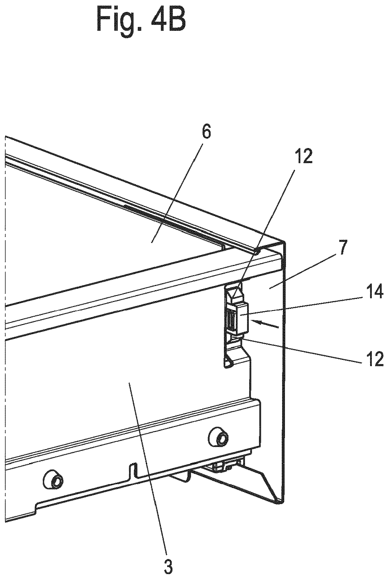

In Figur 4A ist der hintere Bereich des Schubkastens 1 vor der Montage der Rückwand 3 gezeigt. Das Verbindungselement 9 ist in der Seitenzarge 5 angeordnet und durch den Adapter 8 fixiert. Von dem inneren Wandelement 6 stehen die Rastmittel 12 und das Sicherungselement 14 hervor. In einem nächsten Schritt wird die Rückwand 3, die aus einem gebogenen Stahlblech hergestellt ist, auf die Rastmittel 12 aufgeschoben und an dem Steg 13 verrastet. Um die Rückwand 3 in der montieren Position zu sichern, wird nun das Sicherungselement 14 von dem Verbindungselement abgetrennt und zur Frontblende 2 hin verschoben, wie dies durch den Pfeil darstellt ist, so dass die Rastmittel 12 kraftschlüssig fixiert werden und ein Lösen der Rastverbindung verhindert wird.

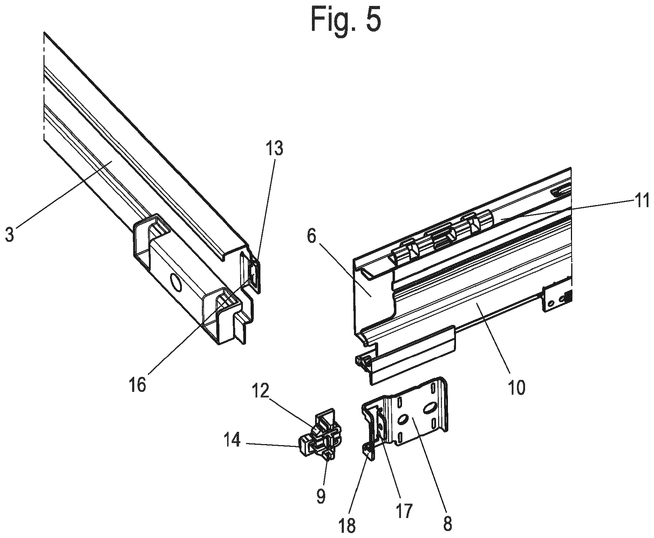

In Figur 5 ist die Rückwandverbindung in einer Explosionsdarstellung gezeigt. Die Rückwand 3 aus dem gebogenen Stahlblech umfasst an gegenüberliegenden Stirnseiten einen Steg 13, in dem eine Öffnung 16 ausgespart ist, in die die Raststege mit den hakenförmigen Abschnitten eingesteckt werden können, um dort verrastet zu werden. Die hakenförmigen Abschnitte liegen dann auf einem Rand des Steges 13 auf.

Das Verbindungselement 9 wird an einer Aufnahme des Adapters 8 eingesteckt und ist zu einer Vorderseite hin durch einen Steg 17 abgestützt und/oder von einem Bügel 18 umgriffen. Wenn der Adapter 8 an dem inneren Wandelement 6, der Halteschiene 10 und/oder der oberen Verstärkungsschiene 11 durch Schweißen oder Kleben fixiert ist, befindet sich das Verbindungselement unverlierbar an der Aufnahme des Adapters 8.

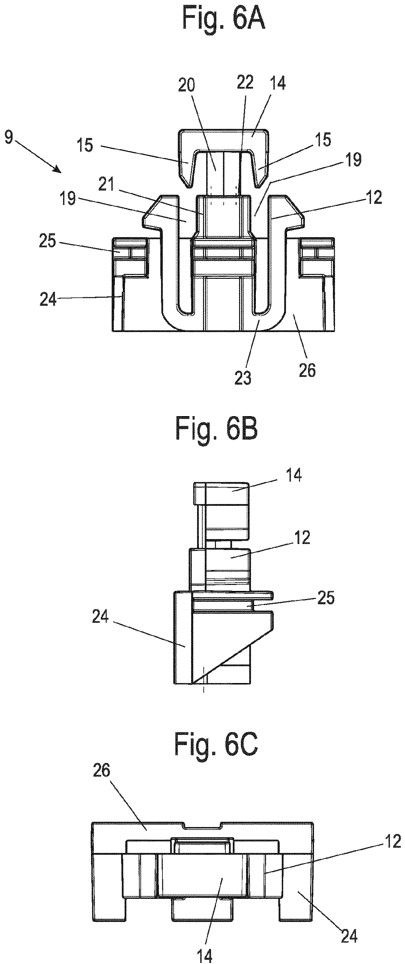

In den Figuren 6A bis 6E ist das Verbindungselement 9 im Detail gezeigt. Das Verbindungselement 9 ist als Formkörper aus Kunststoff hergestellt und umfasst das U-förmig ausgebildete Sicherungselement 14 mit den beiden Keilen 15. Das Sicherungselement 14 ist über einen Steg 20 mit einem Schraubkanal 21 verbunden, wobei der Schraubkanal 21 mit dem Steg 20 über eine Sollbruchstelle 22 verbunden ist. Zur Montage des Sicherungselementes 14 kann diese Sollbruchstelle 22 aufgebrochen werden, um die Keile 15 in eine Aufnahme 19 einzuschieben, die zwischen den Raststegen des Rastmittels 12 und dem Schraubkanal 21 ausgebildet ist. Die Raststege sind biegbar und über einen Bodenabschnitt 23 mit einem Formkörper 24 verbunden. An dem Formkörper 24 befinden sich schlitzförmige Aufnahmen 25, die sich im Wesentlichen senkrecht zur Längsrichtung des Schraubkanals 21 erstrecken. In diese schlitzförmigen Aufnahmen 25 kann der Bügel 18 eingesteckt werden. Ferner ist an dem Formkörper 24 ein Wandabschnitt 26 angeformt, der beim Aufstecken des Verbindungselementes 9 auf den Adapter 8 einen Anschlag ausbildet, so dass das Verbindungselement 9 an den Adapter 8 positionsgenau angeordnet werden kann. Nach der Positionierung des Verbindungselementes 9 kann der Adapter 8 mit einem Abschnitt beabstandet von dem Verbindungselement 9 an dem inneren Wandelement 6 oder der oberen Verstärkungsschiene fixiert werden.

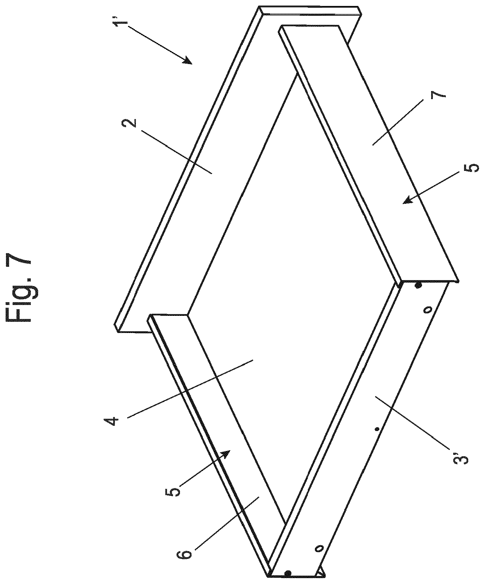

In Figur 7 ist ein modifizierter Schubkasten 1' gezeigt, bei dem eine andere Rückwand 3' montiert ist, und die übrigen Bauteile, insbesondere die Seitenzargen 5, baugleich ausgebildet sind und dabei dieselben Bezugszeichen wie bei dem ersten Ausführungsbeispiel besitzen.

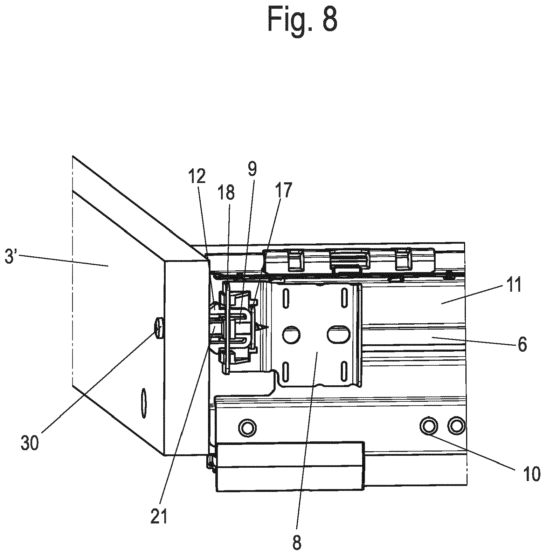

In Figur 8 ist der Eckbereich mit der Rückwand 3' im Detail gezeigt. In der Seitenzarge 5 befindet sich der Adapter 8 mit dem Verbindungselement 9, wie dies vorstehend beschrieben wurde. An dem Verbindungselement 9 ist allerdings keine Rückwand 3 aus einem gebogenen Stahlblech montiert, die an den Rastmitteln 12 verrastet ist, sondern eine Rückwand 3' in Form einer Platte aus einem Holzwerkstoff. Diese Rückwand 3' ist über eine Schraube 30 fixiert, die in den Schraubkanal 21 des Verbindungselementes 9 eingedreht ist und somit für ein kraftschlüssiges Fixieren der Rückwand 3' sorgt. Um die Rückwand 3' an dem Verbindungselement 9 zu montieren, das im Übrigen wie bei dem vorangegangenen Ausführungsbeispiel über den Adapter 8 an der Seitenzarge 5 festgelegt ist, wird das Sicherungselement 14 an der Sollbruchstelle 22 abgetrennt, um den Schraubkanal 21 zu öffnen, und in den Schraubkanal 21 die Schraube 30 einzudrehen.

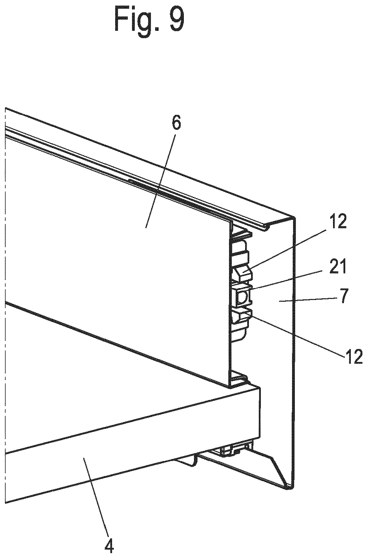

In Figur 9 ist der Eckbereich des Schubkastens 1' vor der Montage der Rückwand 3' gezeigt. An dem Verbindungselement 9 wurde das Sicherungselement 14 abgetrennt, so dass nun der Schraubkanal 21 mit seiner Öffnung von der Rückseite her zugänglich ist. Auf beiden Seiten des Schraubkanals 21 sind Rastmittel 12 in Form von Raststegen vorgesehen, die aber funktionslos sind.

In einem nächsten Schritt wird die plattenförmige Rückwand 3' an den beiden Seitenzargen 5 positioniert, wobei benachbart zu einer Stirnseite der Rückwand eine Öffnung 31 vorgesehen ist, in die die Schraube 30 eingedreht werden kann, die sowohl die Rückwand 3' durchgreift und dann in den Schraubkanal 21 des Verbindungselementes 9 eingreift. Die Rückwand 3 liegt anschließend entweder an dem inneren Wandelement 6 und/oder dem Endbereich des Schraubkanals 21 an.

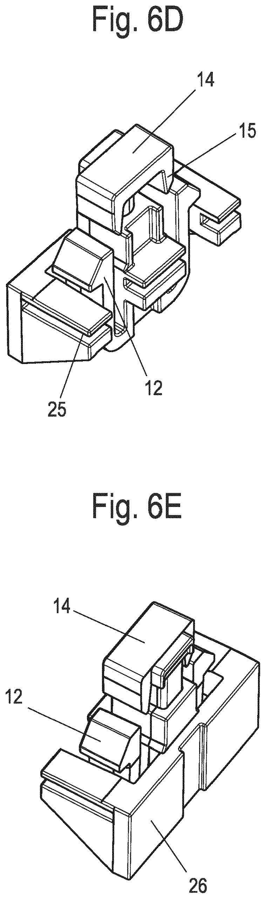

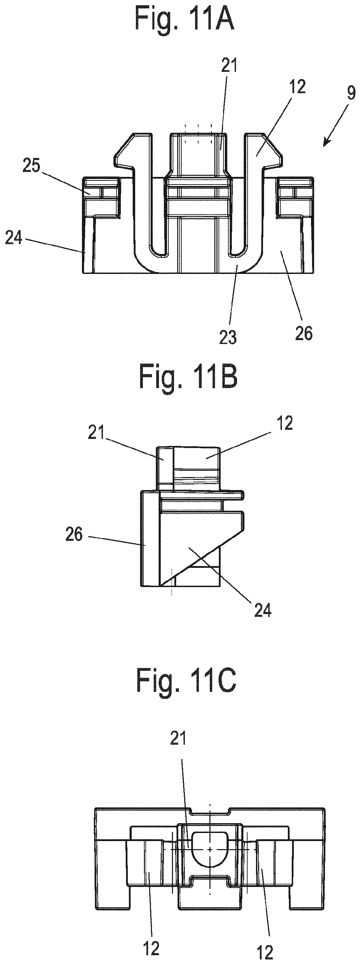

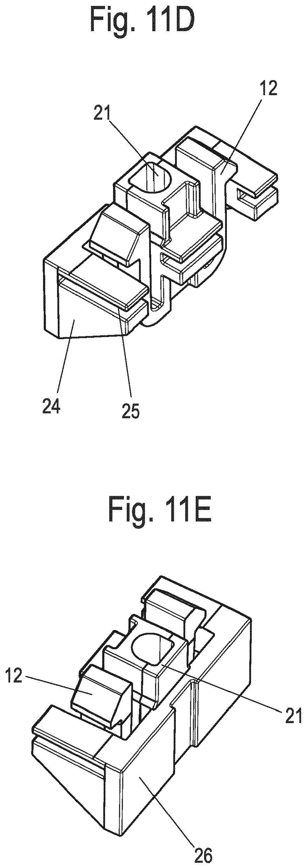

In den Figuren 11A bis 11E ist das Verbindungselement 9 gezeigt, das dem Verbindungselement der Figur 6 entspricht, bis auf die Abtrennung des Sicherungselementes 14. Das Verbindungselement 9 besitzt somit einen für die Schraube 30 geöffneten Schraubkanal 21, der integral mit einem Formkörper 24 ausgebildet ist, an dem eine schlitzförmige Aufnahme 25 zur Fixierung des Verbindungselementes 9 an dem Bügel 18 des Adapters 8 vorgesehen ist. Zudem weist der Formkörper 24 einen Wandabschnitt 26 auf, die als Anschlag an dem umgebogenen Steg 17 anliegt: Die Rastmittel 12 sind bei Montage einer Rückwand 3' aus einem Holzwerkstoff nicht notwendig, allerdings kann mit dem Verbindungselement 9 sowohl eine Rückwand 3 aus einem umgebogenen Stahlblech verrastet und kraftschlüssig fixiert werden und alternativ eine Rückwand 3' aus einem Holzwerkstoff montiert werden, ohne dass andere Bauteile erforderlich sind. Sollte die Rückwand 3 einmal beschädigt werden, kann zur Reparatur eine Rückwand 3' aus einem Holzwerkstoff auch noch nachträglich montiert werden.

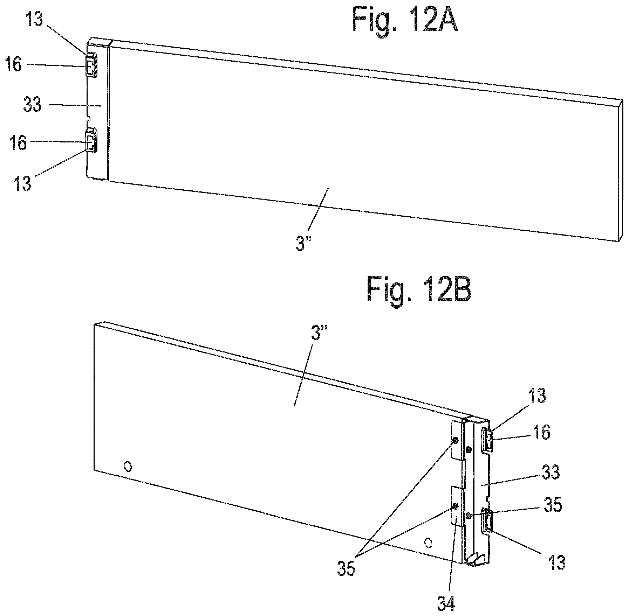

In den Figuren 12A und 12B ist eine modifizierte plattenförmige Rückwand 3" gezeigt, beispielsweise aus einem Holzwerkstoff, an der an gegenüberliegenden Seiten ein Adapter 33 fixiert wird, wobei in den Figuren nur ein Adapter 33 dargestellt ist. An dem Adapter 33 aus einem gebogenen Stahlblech sind zwei beabstandete Stege 13 ausgeformt, in denen jeweils eine Öffnung 16 ausgespart ist, in die die Raststege eines Befestigungsmittels eingesteckt werden können, wie dies schon in Figur 3 gezeigt ist. Jeder Adapter 33 weist dabei Laschen 34 auf, die auf einer Rückseite der Rückwand 3" aufliegen. Der Adapter 33 ist über Schrauben 35 an der Rückwand 3" festgelegt, die sowohl in die Laschen 34 als auch an der Stirnseite der Rückwand 3" eingedreht sind.

In dem dargestellten Ausführungsbeispiel wird das Verbindungselement 9 an einem Adapter 8 fixiert. Es ist natürlich auch möglich, das Verbindungselement 9 unmittelbar an der Verstärkungsschiene 11 oder der Halteschiene 10 zu fixieren oder eine andere Befestigungsmechanik für das Verbindungselement 9 vorzusehen. Zudem können die Rastmittel 12 auch verändert werden, um eine Verrastung der Rückwand 3 an dem Verbindungselement 9 vorzusehen.

In dem dargestellten Ausführungsbeispiel wird die Rückwand 3 oder 3' jeweils an einem einzigen Verbindungselement 9 fixiert. Es ist natürlich möglich, mehrere Verbindungselemente 9 benachbart zu der Rückwand 3 oder 3' vorzusehen, um dann die Rückwand 3 oder 3' an mehreren Verbindungselementen 9 zu fixieren.

### Bezugszeichenliste

- 1,1': Schubkasten
- 2: Frontblende
- 3, 3', 3": Rückwand
- 4: Boden
- 5: Seitenzarge
- 6: Wandelement
- 7: Wandelement
- 8: Adapter
- 9: Verbindungselement
- 10: Halteschiene
- 11: Verstärkungsschiene
- 12: Rastmittel
- 13: Steg
- 14: Sicherungselement
- 15: Keil
- 16: Öffnung
- 17: Steg
- 18: Bügel
- 19: Aufnahme
- 20: Steg
- 21: Schraubkanal
- 22: Sollbruchstelle
- 23: Bodenabschnitt
- 24: Formkörper
- 25: Aufnahme
- 26: Wandabschnitt
- 30: Schraube
- 31: Öffnung
- 33: Adapter
- 34: Lasche
- 35: Schrauben

## Patentansprüche

1. Schubkasten (1) mit einer Rückwand (3), einer Frontblende (2), und zwei die Frontblende (2) und die Rückwand (3) verbindenden Seitenzargen (5), wobei an oder in zumindest einer Seitenzarge (5) ein Verbindungselement (9) vorgesehen ist, das Rastmittel (12) aufweist und an oder in einer Rastaufnahme (16) an der Rückwand (3) verrastbar ist, wobei das Verbindungselement (9) an oder in einem Adapter (8) fixiert ist, wobei der Adapter (8) mit einem Wandelement (6) in oder an der Seitenzarge (5) verbunden ist und ein Sicherungselement die Rastmittel kraftschlüssig durch Klemmung fixiert, **dadurch gekennzeichnet, dass** das Sicherungselement (14) mindestens einen Keil (15) oder Klemmkörper aufweist, der einen Raststeg des Rastmittels (12) klemmend fixiert.

2. Schubkasten nach Anspruch 1, **dadurch gekennzeichnet, dass** an dem Verbindungselement (9) das Sicherungselement (14) integral angeformt ist und über eine Sollbruchstelle (22) von dem Verbindungselement (9) abtrennbar ist.

3. Schubkasten nach Anspruch 1 oder 2, **dadurch gekennzeichnet, dass** das Sicherungselement (14) im Wesentlichen parallel zur Längsrichtung von einer Rückseite in Richtung der Frontblende (2) in das Verbindungselement (9) einschiebbar ist.

4. Schubkasten nach einem der vorhergehenden Ansprüche, **dadurch gekennzeichnet, dass** das Verbindungselement (9) ein Formteil aus Kunststoff ist.

5. Schubkasten nach einem der vorhergehenden Ansprüche, **dadurch gekennzeichnet, dass** in dem Verbindungselement (9) ein Schraubkanal (21) zum optionalen Befestigen einer Rückwand, insbesondere aus einem Holzwerkstoff (3') mittels einer Schraube (30) vorgesehen ist.

6. Verfahren zur Montage einer Rückwand (3) an einer Seitenzarge (5) eines Schubkastens (1), mit den folgenden Schritten:
- Einsetzen eines Verbindungselementes (9) in eine Aufnahme an einem Adapter (8) an oder in einer Seitenzarge (5) in eine Richtung im Wesentlichen senkrecht zur Längsrichtung der Seitenzarge (5);
- Festlegen des Adapters (8) mit dem Verbindungselement (9) an einem Wandelement (6) der Seitenzarge (5); und
a) Aufschieben einer Rückwand (3) auf ein Rastmittel (12) an dem Verbindungselement (9) und Verrasten der Rückwand (3) an dem Rastmittel (12) und kraftschlüssiges Fixieren des Rastmittels (12) über ein Sicherungselement (14),
oder
b) Anlegen einer Rückwand (3') an das Verbindungselement (9) und Einbringen einer Schraube (30) durch die Rückwand (3') in einen Schraubkanal (21) an dem Verbindungselement (9).
**dadurch gekennzeichnet, dass** der Adapters (8) mit dem Verbindungselement (9) an dem Wandelement (6) der Seitenzarge (5) verklebt oder verschweißt wird und die Rastmittel (12) zwei Raststege umfassen und das Sicherungselement (14) klemmend zwischen die beiden Raststege eingeschoben wird.

7. Verfahren nach Anspruch 6, **dadurch gekennzeichnet, dass** das Montieren des Sicherungselementes (14) im Wesentlichen parallel zur Längsrichtung der Seitenzarge (5) erfolgt.

8. Verfahren nach Anspruch 6 oder 7, **dadurch gekennzeichnet, dass** das Sicherungselement (14) integral mit dem Verbindungselement (9) ausgebildet ist und für die Montage von dem Verbindungselement (9) abgetrennt wird und in eine Aufnahme an dem Verbindungselement (9) eingeschoben wird.

## Claims

1. A drawer (1) having a rear wall (3) a front panel (2), and two side frames (5) connecting the front panel (2) and the rear wall (3), wherein a connecting element (9) is provided on or in at least one side frame (5), which connecting element has catch means (12) and is lockable on or in a catch receptacle (16) on the rear wall (3), wherein the connecting element (9) is fixed on or in an adapter (8), wherein the adapter (8) is connected to a wall element (6) in or on the side frame (5) and a securing element fixes the catch means in a friction-locked manner, in particular by clamping, **characterized in that** the securing element (14) has at least one wedge (15) or clamping body, which fixes a catch web of the catch means (12) by clamping.

2. The drawer according to Claim 1, **characterized in that** the securing element (14) is integrally formed on the connecting element (9) and is detachable from the connecting element (9) via an intended breakpoint (22).

3. The drawer according to Claim 1 or 2, **characterized in that** the securing element (14) is insertable into the connecting element (9) essentially parallel to the longitudinal direction from a rear side in the direction of the front panel (2).

4. The drawer according to any one of the preceding claims, **characterized in that** the connecting element (9) is a molded part made of plastic.

5. The drawer according to any one of the preceding claims, **characterized in that** a screw channel (21) is provided in the connecting element (9) for the optional fastening of a rear wall, in particular made of a wooden material (3'), by means of a screw (30).

6. A method for mounting a rear wall (3) on a side frame (5) of a drawer (1), having the following steps:
- inserting a connecting element (9) into a receptacle on an adapter (8) on or in a side frame (5) in a direction essentially perpendicular to the longitudinal direction of the side frame (5);
- fixing of the adapter (8) with the connecting element (9) to a wall element (6) of the side frame (5); and
a) pushing a rear wall (3) onto a catch means (12) on the connecting element (9) and locking the rear wall (3) on the catch means (12) and friction-locked fixing of the catch means (12) via a securing element (14),
or
b) applying a rear wall (3') to the connecting element (9) and introducing a screw (30) through the rear wall (3') into a screw channel (21) on the connecting element (9),
**characterized in that** the adapter (8) with the connecting element (9) is adhesively bonded or welded to the wall element (6) of the side frame (5) and that the catch means (12) comprise two catch webs and the securing element (14) is inserted in a clamping manner between the two catch webs.

7. The method according to Claim 6, **characterized in that** the mounting of the securing element (14) is carried out essentially parallel to the longitudinal direction of the side frame (5).

8. The method according to any one of Claims 6 or 7, **characterized in that** the securing element (14) is integrally formed with the connecting element (9) and is detached from the connecting element (9) for the mounting and inserted into a receptacle on the connecting element (9).

## Revendications

1. Tiroir (1) comportant un dos (3), une façade (2) et deux châssis latéraux (5) reliant la façade (2) et le dos (3),
- au moins un châssis latéral (5) comportant un élément de liaison (9) muni de moyens d'accrochage (12) et pouvant s'accrocher sur ou dans un logement d'accrochage (16) du dos (3),
- l'élément de liaison (9) étant fixé dans ou sur un adaptateur (8),
- l'adaptateur (8) étant relié par un élément de paroi (6) dans ou au châssis latéral (5) et un élément de sécurité fixant par serrage, le moyen d'accrochage par une liaison par la forme,
**caractérisé en ce que**
l'élément de sécurité (14) comporte au moins un coin (15) ou organe de serrage qui bloque par serrage une entretoise d'accrochage du moyen d'accrochage (12).

2. Tiroir selon la revendication 1,
**caractérisé en ce que**
l'élément de liaison (9) comporte l'élément de sécurité (14) formé de manière intégrale sur celui-ci et séparable de l'élément de liaison (9) par une zone de rupture de consigne (22).

3. Tiroir selon la revendication 1 ou 2,
**caractérisé en ce que**
l'élément de sécurité (14) se glisse pratiquement parallèlement à la direction longitudinale du dos en direction de la façade (2) dans l'élément de liaison (9).

4. Tiroir selon l'une des revendications précédentes,
**caractérisé en ce que**
l'élément de liaison (9) est une pièce moulée en matière plastique.

5. Tiroir selon l'une quelconque des revendications précédentes,
**caractérisé en ce que**
l'élément de liaison (9) comporte un canal de vissage (21) pour se fixer en option à la paroi arrière, notamment en un matériau à base de bois (3') à l'aide d'une vis (30).

6. Procédé de montage du dos (3) d'un tiroir (1) à son châssis latéral (5) comprenant les étapes suivantes consistant à :
- introduire un élément de liaison (9) dans un logement d'un adaptateur (8) ou dans un châssis latéral (5) dans une direction pratiquement perpendiculaire à la direction longitudinale du châssis latéral (5),
- fixer l'adaptateur (8) avec l'élément de liaison (9) à un élément de paroi (6) du châssis latéral (5), et
a) emmancher le côté arrière (3) sur le moyen d'accrochage (12) à l'élément de liaison (9) et accrocher le dos (3) à l'élément d'accrochage (12) et fixer par une liaison par la forme, l'élément d'accrochage (12) par un élément de sécurité (14), ou
b) appliquer le dos (3') contre l'élément de liaison (9) et mettre une vis (30) à travers la paroi arrière (3') dans un canal de vis (21) de l'élément de liaison (9),
**caractérisé en ce que**
l'adaptateur (8) est collé ou soudé avec l'élément de liaison (9) à l'élément de paroi (6) du châssis latéral (5) et le moyen d'accrochage (12) comprend deux entretoises d'accrochage et l'élément de sécurité (14) se glisse avec serrage entre les deux entretoises d'accrochage.

7. Procédé selon la revendication 6,
**caractérisé en ce que**
le montage de l'élément de sécurité (14) se fait pratiquement parallèlement à la direction longitudinale du châssis latéral (5).

8. Procédé selon la revendication 6 ou 7,
**caractérisé en ce que**
l'élément de sécurité (14) est réalisé en une seule pièce avec l'élément de liaison (9) et on le sépare de l'élément de liaison (9) pour le montage et on le glisse dans un logement de l'élément de liaison (9).
